# EUROPÄISCHE PATENTSCHRIFT

(11) **EP 2 507 192 B1**
(45) Veröffentlichungstag und Bekanntmachung des Hinweises auf die Patenterteilung: **14.09.2016**
(21) Anmeldenummer: 10784553.9
(22) Anmeldetag: 02.12.2010
(51) Int. Cl.: C04B 35/581, C04B 35/628, C04B 35/632, C04B 35/626, C04B 35/634, C04B 35/636

(54) **VERFAHREN ZUR HERSTELLUNG VON STRANGGEPRESSTEN FUNKTIONSFORMKÖRPER AUS HOCHWÄRMELEITFÄHIGER ALUMINIUMNITRIDKERAMIK**
METHOD FOR THE MANUFACTURING OF EXTRUDED MOLDED FUNCTIONAL BODY MADE OF HIGHLY THERMALLY CONDUCTIVE ALUMINUM NITRIDE CERAMIC
PROCÉDÉ DE FABRICATION DE CORPS MOULÉS FONCTIONNELS EXTRUDÉS EN NITRURE D'ALUMINIUM À HAUTE CONDUCTIVITÉ THERMIQUE

(30) Priorität: 02.12.2009 DE 102009047412
(43) Veröffentlichungstag der Anmeldung: 10.10.2012
(73) Patentinhaber: CeramTec GmbH, 73207 Plochingen (DE)
(72) Erfinder: GÜNTHNER, Gerhard, 95689 Fuchsmühl (DE); SCHÖLER, Axel, 95032 Hof (DE); DOHN, Alexander, 96117 Memmelsdorf (DE); THIMM, Alfred, 95632 Wunsiedel (DE)
(74) Vertreter: Scherzberg, Andreas Hans
(86) Internationale Anmeldenummer: PCT/EP2010/068717
(87) Internationale Veröffentlichungsnummer: WO 2011/067325

(56) Entgegenhaltungen:
- EP-A1- 0 588 171
- EP-A1- 1 726 419
- EP-A1- 1 900 488
- EP-A2- 0 287 841
- DE-A1- 4 119 695
- JP-A- 2007 051 062
- GROAT ERIC A ET AL: "Aqueous slip casting of stabilized AlN powders", AMERICAN CERAMIC SOCIETY BULLETIN, AMERICAN CERAMIC SOCIETY. COLUMBUS, US, Bd. 73, Nr. 11, 1. November 1994 (1994-11-01), Seiten 75-78, XP008134334, ISSN: 0002-7812

## Beschreibung

Gegenstand der vorliegenden Erfindung ist ein Verfahren zur Herstellung von Funktionsformkörpern aus hochwärmeleitfähigen Materialien.

Widerstandsträger mit hohem Isolierwiderstand bestehen beispielsweise aus zylindrischen Keramikträgern. Auf deren Oberfläche wird ein schichtförmiger Überzug mit definiertem Widerstand aufgesintert/aufgetempert.

Die Keramik besteht dabei vorwiegend aus einem tonerdehaltigen Material mit geringer Wärmeleitfähigkeit (etwa 10-25 W/m * K).

Funktionsformkörper aus hochwärmeleitendem Material mit definiertem Design, beispielsweise langgestreckte Kühlkörper mit Innenrohr(en) für Flüssigkühlung mit Abmessungen von 30 * 30 * 250 mm, sind kommerziell noch nicht zu erhalten. Die für solche Zwecke geeigneten hochwärmeleitenden Materialien lassen sich nur schlecht oder gar nicht mit den bekannten, preiswerten Verfahren zu den gewünschten Designs verarbeiten.

Als hochwärmeleitfähiges Material ist beispielsweise Aluminiumnitrid (AIN) besonders bevorzugt. Eine aus diesem Material hergestellte Keramik (AIN-Keramik) wäre für einen leistungsintensiven Einsatz, beispielsweise um Wärme schnell abzuführen, besonders geeignet. Das für Funktionsformkörper mit definiertem Design verwendete Strangpressverfahren lässt sich bislang nicht für Aluminiumnitrid (AIN) einsetzen, da Strangpressmassen üblicherweise mit Wasser konditioniert werden. Die Hydrolyseempfindlichkeit des Aluminiumnitrids verhindert die Verwendung dieses Verfahrens und macht damit eine großtechnische Herstellung von Funktionsformkörpern aus Aluminiumnitrid mit definiertem Design bisher unmöglich. Im wässrigen Medium ist eine unvollständige Spaltung von Aluminiumnitrid in Aluminiumhydroxid und Ammoniak zu beobachten.

Eine Aufgabe der vorliegenden Erfindung war es daher, ein für das Strangpressverfahren geeignetes Aluminiumnitrid bereitzustellen. Eine weitere Aufgabe der vorliegenden Erfindung bestand darin, stranggepresste Funktionsformkörper mit definiertem Design aus Aluminiumnitrid bereitzustellen. Aluminiumnitrid kann grundsätzlich auf zwei Arten hergestellt werden.

Ein Weg zur Herstellung des Aluminiumnitrids ist die so genannte Direktnitridierung. Bei dieser Syntheseart wird metallisches Aluminium- bzw. Aluminiumoxidpulver bei Temperaturen >900 °C mit N₂ oder NH₃ zu Aluminiumnitrid (AIN) umgesetzt:

2 Al + N₂ → 2 AlN

Al₂O₃ + 2 NH₃ → 2 AIN + 3 H₂O

Alternativ lässt sich bei Temperaturen >1600 °C Aluminiumnitridpulver aus Aluminiumoxid, Stickstoff bzw. Ammoniak und Kohlenstoff im Überschuss in einer carbothermischen Reaktion darstellen:

2 Al₂O₃ + 9 C + 4 NH₃ → 4 AlN + 3 CH₄ + 6 CO

Al₂O₃ + 3C + N₂ → 2 AlN + 3 CO

Anders als direktnitridiertes Aluminiumnitrid neigt Aluminiumnitrid aus carbothermischer Herstellung in geringerem Maße zur Hydrolyse.

EP 1 726 419 A1 beschreibt gesinterte AlN-Formkörper, die eine hohe Leitungsfähigkeit beweisen, und offenbart ein Strangpressverfahren einer Mischung enthaltend: ein carbothermisch hergestelltes AlN-Pulver; Y2O3 als Sinterhilfsmittel in einer Menge von 1 bis 5 Gewichtsteilen für 100 Teile vom keramischen Pulver; einen Cellulosebinder; und Wasser in einer Menge von 1 bis 15 Gew%. Erfindungsgemäß gelöst wurden die der Erfindung zugrunde liegenden Aufgaben durch die Bereitstellung eines besonders konditionierten Aluminiumnitrids und dessen Verwendung im Strangpressverfahren. Erfindungsgemäß vorgesehen ist, ein an sich bekanntes, carbothermisch hergestelltes Aluminiumnitridpulver und ein an sich bekanntes Aluminiumnitrid-Yttriumoxid-Granulat, beispielsweise ein analog dem EP-Patent EP 0 258 523 B1 hergestelltes Aluminiumnitrid-Yttriumoxid-Granulat, vorzugsweise ein carbothermisch hergestelltes Aluminiumnitrid-Yttriumoxid-Granulat einzusetzen. Vorzugsweise ist das Aluminiumnitrid-Yttriumoxid-Granulat mit einem organischen Coating versehen und weist einen für den Verwendungszweck ausreichend hohen Yttriumoxidgehalt auf. Aluminiumnitrid-Yttriumoxid-Granulat mit einem organischen Coating kann beispielsweise analog dem EP-Patent EP 0 588 171 B1 hergestellt werden.

Die erfindungsgemäß einsetzbaren Ausgangsmaterialien sind auch kommerziell zu erhalten.

Überraschenderweise lassen sich die erfindungsgemäß einsetzbaren Aluminiumnitrid-Typen mit Wasser, mindestens einem organischen Binder und gegebenenfalls Dispergiermitteln und Ölen oder Wachsen zu einer chemisch stabilen strangpressbaren Masse ansetzen. Daraus können Funktionsformkörper aus Aluminiumnitrid mit definiertem Design, beispielsweise kleine Vollkörper, kurze zylindrische Hohlkörper mit wenigen Millimetern Größe, aber auch lange runde oder eckige Profile mit nahezu beliebigen Abmessungen, beispielsweise Profile mit etwa 90 mm Außenabmessung und einer Länge von üblicherweise 100 - 400 mm hergestellt werden.

Erfindungsgemäß vorgesehen ist, ein carbothermisch hergestelltes Aluminiumnitridpulver und ein carbothermisch hergestelltes Aluminiumnitrid-Yttriumoxid-Granulat, das vorzugsweise mit einem organischen Coating versehen ist und einen ausreichend hohen Yttriumoxidgehalt aufweist, zu vermischen. Hierdurch wird schon zu Beginn der Pressmassenherstellung eine Hydrolyse weitgehend verhindert, so dass ein sehr aufwändiges Coaten von AIN und Y₂O₃ überflüssig wird.

Die erfindungsgemäß vorgesehenen Aluminiumnitrid-Typen werden im Verhältnis von 20 : 80 bis 80 : 20, vorzugsweise im Verhältnis von 50 : 50, vermischt abhängig vom Gehalt des eingesetzten Granulats an Y₂O₃. Die Gesamtmenge an Y₂O₃ im keramischen Anteil liegt vorzugsweise bei 2 bis 5 %. Falls erforderlich, kann dem Ansatz auch zusätzlich Y₂O₃ zugegeben werden. Das eingesetzte carbothermisch hergestellte Aluminiumnitrid hat üblicherweise eine spezifische Oberfläche von 1 bis 10 m²/g und mittlere Teilchengrößen d₅₀ von 0,5 bis 5 µm, vorzugsweise von 1,0 bis 2,0 µm. Die erfindungsgemäß vorgesehenen Aluminiumnitrid-Typen werden unter Zusatz von mindestens einem Bindemittel, gegebenenfalls Dispergiermitteln und Formentrennölen in Wasser suspendiert und intensiv vermengt. Als Bindemittel geeignet sind Polyvinylalkohole und / oder Cellulosearten, beispielsweise Polyviol, Mowiol und / oder Tylose in Mengen von 2 bis 12 %, vorzugsweise von 5 bis 10%, besonders bevorzugt von 7 bis 8 %, bezogen auf die Gesamtmischung. Als Dispergiermittel geeignet sind vollständig pyrolysierbare Mittel z.B. auf Polyacrylatbasis, in Mengen von 0,05 bis 0,5 %, vorzugsweise von 0,1 bis 0,3 %, besonders bevorzugt von 0,12 bis 0,2 %, bezogen auf die Gesamtmischung. Als Öle sind alle geeignet, die das Gleiten der Masse aus der Strangpresse begünstigen. Diese Hilfsstoffe können in Mengen von 3 bis 10 %, vorzugsweise von 5 bis 8 %, besonders bevorzugt von 6 bis 7 %, bezogen auf die Gesamtmischung, eingesetzt werden. Das für die Suspension erforderliche Wasser macht 0,5 bis 12 % der Gesamtmischung aus.

Die intensiv vermengte Masse wird dann mit Hilfe einer Strangpresse, vorzugsweise innerhalb von 50 h, in die gewünschte Form verpresst und anschließend unter für Aluminiumnitridkeramiken üblichen Bedingungen gesintert.

Aus dem Vorstehenden ergibt sich, dass die erfindungsgemäße Lehre ein Verfahren zur Herstellung eines Funktionsformkörpers aus Aluminiumnitridkeramik betrifft, wobei:
➢ eine wässrige Mischung aus einem carbothermisch hergestelltem Aluminiumnitridpulver und einem Aluminiumnitrid-Yttriumoxid-Granulat, in einem Verhältnis von Aluminiumnitridpulver zu Aluminiumnitrid-Yttriumoxid Granulat von 20:80 bis 80:20, mindestens einem Bindemittel und gegebenenfalls einem Dispergiermittel und / oder einem Öl oder Wachs innig vermengt wird, diese Mischung in einer Strangpresse zu einem Rohfunktionsformkörper (Rohling) verpresst wird und dieser Rohling unter für Aluminiumnitridkeramiken üblichen Bedingungen gesintert wird.

Bei dem erfindungsgemäßen Verfahren ist dabei bevorzugt:
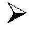 dass das eingesetzte Aluminiumnitrid-Yttriumoxid-Granulat carbothermisch hergestellt ist;
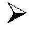 dass das Aluminiumnitrid-Yttriumoxid-Granulat mit einem organischen Coating versehen ist;
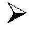 dass das carbothermisch hergestellte Aluminiumnitridpulver und das Aluminiumnitrid-Yttriumoxid-Granulat im Verhältnis von 50 : 50 vermischt werden;
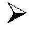 dass die Gesamtmenge an Y₂O₃ im keramischen Anteil vorzugsweise bei 2 bis 5 % liegt;
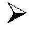 dass das eingesetzte carbothermisch hergestellte Aluminiumnitrid eine spezifische Oberfläche von 1 bis 10 m²/g und mittlere Teilchengrößen d₅₀ von 0,5 bis 5 µm, vorzugsweise von 1,0 bis 2,0 µm aufweist;
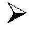 dass das Bindemittel ausgewählt ist aus Polyvinylalkoholen und / oder Cellulosearten, beispielsweise Polyviol, Mowiol und / oder Tylose in Mengen von 2 bis 12 %, vorzugsweise von 5 bis 10%, besonders bevorzugt von 7 bis 8 %, bezogen auf die Gesamtmischung;
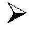 dass als Dispergiermittel vollständig pyrolysierbare Mittel eingesetzt werden, beispielsweise auf Polyacrylatbasis, in Mengen von 0,05 bis 0,5 %, vorzugsweise von 0,1 bis 0,3 %, besonders bevorzugt von 0,12 bis 0,2 %, bezogen auf die Gesamtmischung;
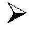 dass Öle verwendet werden, die das Gleiten der Masse aus der Strangpresse begünstigen und in Mengen von 3 bis 10 %, vorzugsweise von 5 bis 8 %, besonders bevorzugt von 6 bis 7 %, bezogen auf die Gesamtmischung, eingesetzt werden;
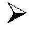 dass das für die Suspension erforderliche Wasser 0,5 bis 12 % der Gesamtmischung ausmacht.

Das erfindungsgemäße Verfahren erlaubt die Herstellung von Funktionformkörpern Aluminiumnitridkeramik, die als Träger für Leuchtdioden, als Widerstandsröhrchen, zum Aufbau von Kühlkörpern für Leuchtdioden oder als Kühler, insbesondere als Flüssigkühler verwendet werden können.

Die nachfolgenden Beispiele sollen die Erfindung näher erläutern, ohne sie einzuschränken.

### Beispiel 1 (erfindungsgemäß):

50 % carbothermisch hergestelltes AlN-Pulver und 50 % AIN-Granulat aus carbothermisch hergestelltem AlN und 4,8 % Y₂O₃ werden vermengt. Man gibt dann 6,0 % ÖI, 0,12 % Dispergiermittel, 1,3 % Wasser und 7,6 % organischen Binder hinzu und vermengt intensiv. Dieser Ansatz wird zu den folgenden Funktionsformkörpern aus Aluminiumnitrid mit definiertem Design strangverpresst.
1.1 Es werden Rohlinge von 30 * 30 mm im Querschnitt und einer runden Aussparung von 12 mm Weite strangverpresst, in Einzelstücke von 300 mm geschnitten, getrocknet und unter Stickstoff im Graphitofen bei 1800°C für gesintert. Der Sinterkörper hat eine Dichte von 3,29 g/cm³ und eine Wärmeleitfähigkeit von 180 W/m * K. Er wird auf mindestens einer Seite geschliffen und mit Goldpaste ein Leiterbahnlayout zur Kontaktierung von LED metallisiert. Solche Funktionsformkörper finden beispielsweise Verwendung als Träger für Leuchtdioden.
1.2 Es werden runde Rohlinge von 3 mm Querschnitt strangverpresst, mit einer Aussparung von 1,5 mm Weite. Daraus werden Einzelstücke von 10 mm Länge geschnitten, getrocknet und unter Stickstoff im Graphitofen bei 1800°C gesintert. Solche Funktionsformkörper finden beispielsweise Verwendung als Widerstandsröhrchen.
1.3 Es werden Rohlinge in Form von Kühlkörpern mit Finnen (E- Form) strangverpresst. Abmessung 40 * 40 mm. Geschnitten auf 60 mm Länge. Trocknen und Sintern wie oben. Die flache Seite wird durch Schleifen eingeebnet. Solche Funktionsformkörper finden beispielsweise Verwendung zum Aufbau von Kühlkörpern für Leuchtdioden.
1.4 Es wird ein Grundkörper aus dem erfindungsgemäß aufbereiteten AlN-Ansatz strangverpresst, der wie eine "Pan-Flöte" oder eine kleine Orgel mit gleich langen Röhren ausgebildet ist. Dieser Grundkörper wird getrocknet und unter Stickstoff im Graphitofen bei 1800°C gesintert. Mit entsprechenden Vorrichtungen an den Enden der Röhren versehen, kann dieser Grundkörper beispielsweise als Kühler, insbesondere als Flüssigkühler Verwendung finden.

### Beispiel 2 (nicht erfindungsgemäß):

100 % direktnitridiertes AlN-Pulver, d₅₀ = 2,1 µm werden mit 6,0 % Öl, 0,12 % Dispergiermittel, 1,3 % Wasser und 7,6 % organischem Binder vermischt und intensiv vermengt. Dieser Ansatz wird strangverpresst.

Der Ansatz ist verhärtet, riecht stark nach Ammoniak. Ein Verpressen in der Strangpressmaschine ist nicht möglich, da die Strangpressmaschine nach wenigen ausgepressten Millimetern verstopft wird.

## Patentansprüche

1. Verfahren zur Herstellung eines Funktionsformkörpers aus Aluminiumnitridkeramik, **dadurch gekennzeichnet, dass** eine wässrige Mischung aus einem carbothermisch hergestelltem Aluminiumnitridpulver und einem Aluminiumnitrid-Yttriumoxid-Granulat in einem Verhältnis von Aluminiumnitridpulver zu Aluminiumnitrid-Yttriumoxid Granulat von 20 : 80 bis 80 : 20, mindestens einem Bindemittel und gegebenenfalls einem Dispergiermittel und/oder einem oder Wachs innig vermengt wird, diese Mischung in einer Strangpresse zu einem Rohfunktionsformkörper (Rohling) verpresst wird und dieser Rohling unter für Aluminiumnitridkeramiken üblichen Bedingungen gesintert wird.

2. Verfahren zur Herstellung eines Funktionsformkörpers aus Aluminiumnitridkeramik gemäß Anspruch 1, **dadurch gekennzeichnet, dass** das eingesetzte Aluminiumnitrid-Yttriumoxid-Granulat carbothermisch hergestellt ist.

3. Verfahren zur Herstellung eines Funktionsformkörpers aus Aluminiumnitridkeramik gemäß Anspruch 1 oder 2, **dadurch gekennzeichnet, dass** das Aluminiumnitrid-Yttriumoxid-Granulat mit einem organischen Coating versehen ist.

4. Verfahren zur Herstellung eines Funktionsformkörpers aus Aluminiumnitridkeramik gemäß einem oder mehreren der vorhergehenden Ansprüche, **dadurch gekennzeichnet, dass** das carbothermisch hergestellte Aluminiumnitridpulver und das Aluminiumnitrid-Yttriumoxid Granulat im Verhältnis von 50 : 50 vermischt werden.

5. Verfahren zur Herstellung eines Funktionsformkörpers aus Aluminiumnitridkeramik gemäß einem oder mehreren der vorhergehenden Ansprüche, **dadurch gekennzeichnet, dass** die Gesamtmenge an Y₂O₃ im keramischen Anteil vorzugsweise bei 2 bis 5 % liegt.

6. Verfahren zur Herstellung eines Funktionsformkörpers aus Aluminiumnitridkeramik gemäß einem oder mehreren der vorhergehenden Ansprüche, **dadurch gekennzeichnet, dass** das eingesetzte carbothermisch hergestellte Aluminiumnitrid eine spezifische Oberfläche 5 von 1 bis 10 m²/g und mittlere Teilchengrößen d₅₀ von 0,5 bis 5 µm, vorzugsweise von 1 ,0 bis 2,0 µm aufweist.

7. Verfahren zur Herstellung eines Funktionsformkörpers aus Aluminiumnitridkeramik gemäß einem oder mehreren der vorhergehenden Ansprüche, **dadurch gekennzeichnet, dass** das Bindemittel ausgewählt ist aus Polyvinylalkoholen und/oder Cellulosearten in Mengen von 2 bis 12 %, vorzugsweise von 5 bis 10%, besonders bevorzugt von 7 bis 8%, bezogen auf die Gesamtmischung.

8. Verfahren zur Herstellung eines Funktionsformkörpers aus Aluminiumnitridkeramik gemäß einem oder mehreren der vorhergehenden Ansprüche, **dadurch gekennzeichnet, dass** als Dispergiermittel vollständig pyrolysierbare Mittel eingesetzt werden, beispielsweise auf Polyacrylatbasis, in Mengen von 0,05 bis 0,5 %, vorzugsweise von 0,1 bis 0,3 %, besonders bevorzugt von 0,12 bis 0,2 %, bezogen auf die Gesamtmischung.

9. Verfahren zur Herstellung eines Funktionsformkörpers aus Aluminiumnitridkeramik gemäß einem oder mehreren der vorhergehenden Ansprüche, **dadurch gekennzeichnet, dass** Öle verwendet werden, die das Gleiten der Masse aus der Strangpresse begünstigen und in Mengen 25 von 3 bis 10 %, vorzugsweise von 5 bis 8 %, besonders bevorzugt von 6 bis 7 %, bezogen auf die Gesamtmischung, eingesetzt werden.

10. Verfahren zur Herstellung eines Funktionsformkörpers aus Aluminiumnitridkeramik gemäß einem oder mehreren der vorhergehenden Ansprüche, **dadurch gekennzeichnet, dass** das für die Suspension erforderliche Wasser 0,5 bis 12 % der Gesamtmischung ausmacht.

## Claims

1. A method for producing a moulded functional body from aluminium nitride ceramic material, **characterised in that** an aqueous mixture of a carbothermally produced aluminium nitride powder and an aluminium nitride - yttrium oxide granulate, in a ratio of aluminium nitride powder to aluminium nitride - yttrium oxide granulate of 20 : 80 to 80 : 20, is homogeneously mixed with at least one binding agent and, if applicable, one dispersing agent and/or one or wax, this mixture is pressed in an extruder to form a green moulded functional body (blank), and this blank is sintered under conditions that are usual for aluminium nitride ceramic materials.

2. A method for producing a moulded functional body from aluminium nitride ceramic material according to claim 1, **characterised in that** the aluminium nitride - yttrium oxide granulate used is produced carbothermally.

3. A method for producing a moulded functional body from aluminium nitride ceramic material according to claim 1 or 2, **characterised in that** the aluminium nitride - yttrium oxide granulate is provided with an organic coating.

4. A method for producing a moulded functional body from aluminium nitride ceramic material according to one or more of the preceding claims, **characterised in that** the carbothermally produced aluminium nitride powder and the aluminium nitride - yttrium oxide granulate are mixed in a ratio of 50 : 50.

5. A method for producing a moulded functional body from aluminium nitride ceramic material according to one or more of the preceding claims, **characterised in that** the total quantity of Y₂O₃ in the ceramic portion preferably lies at 2 to 5%.

6. A method for producing a moulded functional body from aluminium nitride ceramic material according to one or more of the preceding claims, **characterised in that** the carbothermally produced aluminium nitride used has a specific surface area 5 of 1 to 10 m²/g and average particle sizes d₅₀ of 0.5 to 5 µm, preferably of 1.0 to 2.0 µm.

7. A method for producing a moulded functional body from aluminium nitride ceramic material according to one or more of the preceding claims, **characterised in that** the binding agent is selected from polyvinyl alcohols and/or types of cellulose in quantities of 2 to 12%, preferably of 5 to 10%, particularly preferably of 7 to 8%, relative to the total mixture.

8. A method for producing a moulded functional body from aluminium nitride ceramic material according to one or more of the preceding claims, **characterised in that** completely pyrolyzable agents are used as dispersing agents, for example on a polyacrylate basis, in quantities of 0.05 to 0.5%, preferably of 0.1 to 0.3%, particularly preferably of 0.12 to 0.2%, relative to the total mixture.

9. A method for producing a moulded functional body from aluminium nitride ceramic material according to one or more of the preceding claims, **characterised in that** oils are employed that promote the sliding of the mass out of the extruder and are used in quantities 25 of 3 to 10%, preferably of 5 to 8%, particularly preferably of 6 to 7%, relative to the total mixture.

10. A method for producing a moulded functional body from aluminium nitride ceramic material according to one or more of the preceding claims, **characterised in that** the water that is required for the suspension constitutes 0.5 to 12% of the total mixture.

## Revendications

1. Procédé de préparation d'un corps moulé fonctionnel en céramique de nitrure d'aluminium, **caractérisé en ce que** l'on mélange intimement un mélange aqueux constitué d'une poudre de nitrure d'aluminium, préparée par voie carbothermique, et d'un granulat de nitrure d'aluminium et d'oxyde d'yttrium, en un rapport de la poudre de nitrure d'aluminium au granulat de nitrure d'aluminium et d'oxyde d'yttrium valant de 20/80 à 80/20, d'au moins un liant, et en option, d'un dispersant et/ou d'une cire, on transforme ce mélange, par compression dans une boudineuse, en un corps moulé fonctionnel brut (ébauche), et l'on fritte cette ébauche dans des conditions habituelles pour des céramiques de nitrure d'aluminium.

2. Procédé de préparation d'un corps moulé fonctionnel en céramique de nitrure d'aluminium, conforme à la revendication 1, **caractérisé en ce que** le granulat de nitrure d'aluminium et d'oxyde d'yttrium utilisé a été préparé par voie carbothermique.

3. Procédé de préparation d'un corps moulé fonctionnel en céramique de nitrure d'aluminium, conforme à la revendication 1 ou 2, **caractérisé en ce que** le granulat de nitrure d'aluminium et d'oxyde d'yttrium est muni d'un revêtement organique.

4. Procédé de préparation d'un corps moulé fonctionnel en céramique de nitrure d'aluminium, conforme à l'une ou plusieurs des revendications précédentes, **caractérisé en ce que** la poudre de nitrure d'aluminium préparée par voie carbothermique et le granulat de nitrure d'aluminium et d'oxyde d'yttrium sont mélangés en un rapport valant 50/50.

5. Procédé de préparation d'un corps moulé fonctionnel en céramique de nitrure d'aluminium, conforme à l'une ou plusieurs des revendications précédentes, **caractérisé en ce que** la proportion totale d'Y₂O₃ dans la partie céramique vaut de préférence de 2 à 5 %.

6. Procédé de préparation d'un corps moulé fonctionnel en céramique de nitrure d'aluminium, conforme à l'une ou plusieurs des revendications précédentes, **caractérisé en ce que** le nitrure d'aluminium préparé par voie carbothermique utilisé présente une aire spécifique de 1 à 10 m²/g et une taille moyenne de particules (d₅₀) de 0,5 à 5 µm, et de préférence, de 1,0 à 2,0 µm.

7. Procédé de préparation d'un corps moulé fonctionnel en céramique de nitrure d'aluminium, conforme à l'une ou plusieurs des revendications précédentes, **caractérisé en ce que** le liant est choisi parmi les poly(alcool vinylique) et/ou les divers types de cellulose, et se trouve présent en une quantité représentant de 2 à 12 %, de préférence de 5 à 10 % et surtout de 7 à 8 % de tout le mélange.

8. Procédé de préparation d'un corps moulé fonctionnel en céramique de nitrure d'aluminium, conforme à l'une ou plusieurs des revendications précédentes, **caractérisé en ce que** l'on utilise comme agent dispersant un agent que l'on pourra complètement éliminer par pyrolyse, par exemple à base de polyacrylate, en une quantité représentant de 0,05 à 0,5 %, de préférence de 0,1 à 0,3 % et surtout de 0,12 à 0,2 % de tout le mélange.

9. Procédé de préparation d'un corps moulé fonctionnel en céramique de nitrure d'aluminium, conforme à l'une ou plusieurs des revendications précédentes, **caractérisé en ce que** l'on utilise des huiles qui favorisent le glissement de la masse hors de la boudineuse, en une quantité représentant de 3 à 10 %, de préférence de 5 à 8 % et surtout de 6 à 7 % de tout le mélange.

10. Procédé de préparation d'un corps moulé fonctionnel en céramique de nitrure d'aluminium, conforme à l'une ou plusieurs des revendications précédentes, **caractérisé en ce que** l'eau nécessaire pour la suspension représente de 0,5 à 12 % de tout le mélange.
